(19) Europäisches Patentamt
European Patent Office
Office européen des brevets

(11) **EP 1 960 084 B1**

(12) **EUROPÄISCHE PATENTSCHRIFT**

(45) Veröffentlichungstag und Bekanntmachung des Hinweises auf die Patenterteilung:
**16.03.2011 Patentblatt 2011/11**

(21) Anmeldenummer: **06829440.4**

(22) Anmeldetag: **08.12.2006**

(51) Int Cl.:
**B01D 39/16** *(2006.01)*   **A47L 9/14** *(2006.01)*

(86) Internationale Anmeldenummer:
**PCT/EP2006/011842**

(87) Internationale Veröffentlichungsnummer:
**WO 2007/068408 (21.06.2007 Gazette 2007/25)**

(54) **FILTERBEUTEL FÜR EINEN STAUBSAUGER SOWIE DESSEN VERWENDUNG**

FILTER BAG FOR A VACUUM CLEANER AND USE THEREOF

SAC FILTRANT POUR UN ASPIRATEUR ET SON UTILISATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.12.2005 DE 102005059214**
**01.09.2006 EP 06018324**

(43) Veröffentlichungstag der Anmeldung:
**27.08.2008 Patentblatt 2008/35**

(73) Patentinhaber: **Eurofilters N.V.**
**3900 Overpelt (BE)**

(72) Erfinder:
• **SCHULTINK, Jan**
**B-3900 Overpelt (BE)**

• **SAUER, Ralf**
**B-3900 Overpelt (BE)**

(74) Vertreter: **Pfenning, Meinig & Partner GbR**
**Patent- und Rechtsanwälte**
**Theresienhöhe 13**
**80339 München (DE)**

(56) Entgegenhaltungen:
**EP-A- 0 564 799        EP-A- 1 197 252**
**EP-A- 1 317 949        EP-A1- 0 974 387**
**DE-A1- 19 544 790     DE-B3- 10 310 435**
**DE-C1- 19 731 860     DE-U1- 29 924 781**
**US-A1- 5 419 953**

EP 1 960 084 B1

**Beschreibung**

Die vorliegende Erfindung betrifft einen Filterbeutel für einen Staubsauger umfassend mindestens drei Lagen, wobei mindestens zwei Lagen, die aus mindestens einer Vliesstofflage und einer Faservlieslage bestehen, durch eine Schweißverbindung verbunden sind, wobei durch die geringe Anzahl Schweißverbindungen pro Fläche eine hohe Bauschigkeit eingestellt wird. Die Erfindung betrifft weiterhin die Verwendung eines derartigen Filterbeutels.

In den letzten Jahren sind zahlreiche Entwicklungen bekannt geworden, die sich damit beschäftigen, die seit langer Zeit im Stand der Technik bekannten ein-oder mehrlagigen Filtertüten aus Papier bzw. Papier und Tissue zu verbessern. Die DE 3 812 849 beschreibt Staubfilterbeutel mit einer Filterpapieraußenlage und einem innenliegenden schmelzgesponnenen Mikrofaservliesstoff (Melt-Blown). Eine mehrlagige Filtertüte aus Vliesstoffen (SMS) offenbaren beispielsweise US 4,589,894 und US 5,647,881. Diese Erfindungen beschäftigten sich hauptsächlich mit der Verbesserung der Staubabscheidung. In der EP 1 258 277 B1 und EP 0 960 645 B1 sind Kombinationen von Vliesstoffen beschrieben, die eine besonders hohe Standzeit und Staubabscheidefähigkeit besitzen. Die EP 1 362 627 A1 beschreibt Filtertüten mit einem mehrlagigen Aufbau, bei dem die Faserdurchmesserverteilungen in der Grobstaubfilterlage und in der Feinstaubfilterlage Gradienten aufweisen. In der EP 1 254 693 A2 wird ein Staubsaugerbeutel beschrieben, bei dem vor einer Filterschicht eine Vorfilterschicht aus einem trocken gelegten, elektrostatisch wirksamen Vliesstoff, vorhanden ist.

Weiterhin wird in der EP 1 197 252 A1 ein Filtermedium aus einem Folienfaservliesstoff beschrieben, das aus trocken gelegten, elektrostatisch geladenen, fibrillierten Fasern besteht, die durch Ultraschallschweißen miteinander verbunden werden. Um eine ausreichende Festigkeit des Vliesstoffes zu erzielen, ist es wesentlich, dass mindestens zwei Ultraschallschweißpunkte pro $cm^2$ vorliegen. Dadurch wird erreicht, dass die einzelnen Fasern direkt miteinander durch Ultraschallschweißverbindungen verbunden sind. Als Vorteil eines solchen Filtermediums wird genannt, dass die Fertigungsgeschwindigkeit im Vergleich zum Vernadeln des Faserflors mit einem Scrim höher ist und der Luftwiderstand des Scrims vermieden werden kann. In der vorstehend erwähnten Anmeldung ist weiterhin noch vorgesehen, dass der Folienfaservliesstoff noch mit weiteren Vliesstofflagen verbunden werden kann. Nachteilig bei dem Filtermedium der EP 1 197 252 A1 ist vor allem, dass das Staubspeichervermögen dieses Materials für die Anwendung als Filtermedium für Staubsaugerbeutel unzureichend ist.

Ausgehend hiervon ist es die Aufgabe der vorliegenden Erfindung, einen Filterbeutel anzugeben, dessen Filtermaterial im Vergleich zu denen, die im Stand der Technik beschrieben sind, eine besonders geringe Rohdichte (bulk density) aufweist, um ein überlegenes Staubspeichervermögen zu erzielen. Der Filterbeutel soll weiterhin einen Aufbau aufweisen, bei dem die Struktur und damit die verbundenen vorteilhaften Eigenschaften der unverfestigten Faserlage möglichst weitgehend erhalten bleiben.

Erfindungsgemäß wird ein Filterbeutel für einen Staubsauger mit einem Filtermaterial vorgeschlagen, der sich insbesondere dadurch auszeichnet, dass er einen Aufbau aus mindestens drei Lagen aufweist, wobei mindestens zwei Lagen, die aus mindestens einer Vliesstofflage und mindestens einer Faservlieslage bestehen, durch Schweißverbindungen verbunden sind, wobei bei den Schweißverbindungen mit möglichst wenig Schweißverbindungen bezogen auf die gesamte durchströmbare Fläche des Filterbeutels, gearbeitet wird. Gemäß der vorliegenden Erfindung wird dies dadurch erreicht, dass, bezogen auf die gesamte durchströmbare Fläche des Filterbeutel, durchschnittlich maximal 10 Schweißverbindungen pro 10 $cm^2$ vorhanden sind, bevorzugt maximal 5 Schweißverbindungen. Der Pressflächenanteil des Schweißmusters beträgt dabei maximal 5 %, bevorzugt maximal 2 % und besonders bevorzugt maximal 1 % der durchströmbaren Fläche des Filterbeutels.

In einer vorteilhaften Ausführungsform weist der Filterbeutel das zusätzliche Merkmal auf, dass die durchschnittliche Totalporosität (Average Total Porosity) mindestens 65 %, bevorzugt mindestens 80 %, ganz besonders bevorzugt mindestens 95 % beträgt.

In einer weiteren vorteilhaften Ausführungsform beträgt der durchschnittliche Median des Porendurchmessers (Average Median Pore Diameter) mindestens 120 $\mu$m, weiter bevorzugt mindestens 150 $\mu$m, weiter bevorzugt mindestens 180 $\mu$m und ganz besonders bevorzugt mindestens 200 $\mu$m.

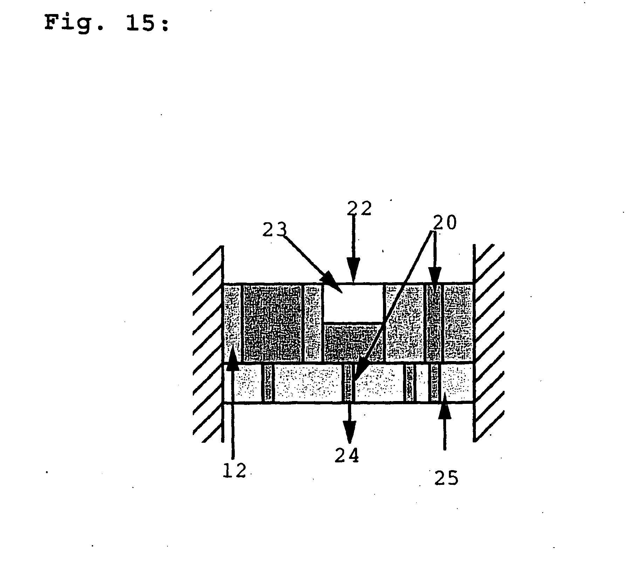

Das Messverfahren zur Bestimmung der durchschnittlichen Totalporosität bzw. des durchschnittlichen Medians des Porendurchmessers gemäß der vorliegenden Erfindung wird anhand der Figuren 15 bis 17 näher beschrieben.

Dadurch, dass nun eine geringe Anzahl von Schweißverbindungen, im Vergleich zum Filtermaterial nach der EP 1 197 252 A1, vorhanden ist, wird bei gleicher flächenbezogener Masse die Dicke und damit Bauschigkeit (bulk) des Materials deutlich erhöht. Durch die geringe Rohdichte (bulk density) des Verbundes weist das Material eine hohe Staubspeicherfähigkeit auf.

Bezüglich der Geometrie, d.h. der Verteilung der Schweißverbindungen auf der durchströmbaren Fläche des Filterbeutels, unterliegt die vorliegende Erfindung keinerlei Einschränkungen mit der Maßgabe, dass maximal 10 Schweißverbindungen pro 10 $cm^2$, bezogen auf die durchströmbare Fläche des Filterbeutels, vorhanden sind. Die Schweißverbindungen können dabei grundsätzlich gleichmäßig, d.h. in gleichen Abständen, über die gesamte Fläche verteilt sein, oder aber auch ungleichmäßig. Die Erfindung umfasst damit auch Ausführungsformen, bei denen Schweißverbindungen lediglich in bestimmten Bereichen in einer höheren Anzahl vorhanden sind und bei denen dann größere freie Flächen entstehen, die dann wieder durch eine erhöhte Anzahl von Schweißverbindungen von einer nächsten größeren freien Fläche getrennt sind. Wesentliches Kriterium ist jeweils immer, dass die in Anspruch 1 angegebene maximale Zahl von Schweißverbindungen nicht überschritten wird. Die Schweißverbindungen selbst können dabei in unterschiedlichen Geometrien ausgebildet sein. So können punktförmige, linienförmige, sternförmige oder auch balkenförmige Schweißverbindungen eingesetzt werden. In Bezug auf die genaue Ausgestaltung der Schweißverbindungen ist neben der Anzahl der Schweißverbindungen als limitierendes Kriterium lediglich noch der Pressflächenanteil des

Schweißmusters zu beachten, der, wie bereits eingangs ausgeführt, maximal 5 %, bevorzugt maximal 2 % und besonders bevorzugt lediglich maximal 1 % beträgt.

Aus stofflicher Sicht umfasst die Faservlieslage der Erfindung, die mit der Vliesstofflage in einem Verbund vorliegt, alle an und für sich im Stand der Technik bekannten Stapelfasern und/oder Filamente. Unter Stapelfasern im Sinne der Erfindung werden auch fibrillierte Folienfasern (Splitfasern) und Crimpfasern verstanden, die Stapelfasern im Sinne der Erfindung können dabei auch bevorzugt elektrostatisch geladen sein.

Als Crimpfasern haben sich besonders diejenigen als günstig erwiesen, die eine räumliche Struktur aufweisen, wie z.B. eine Zickzack-, Wellen- und/oder eine Spiralstruktur. Der Vorteil derartiger Fasern ist, dass sie die Bauschigkeit des Mediums noch deutlich erhöhen können.

Die Crimpfaser kann dabei eine mechanisch gecrimpte, eine Autocrimpfaser und/oder eine Bikomponentencrimpfaser sein. Autocrimpfasern sind z.B. in dem EP-Patent 0 854 943 sowie in der PCT/GB 00/02998 beschrieben. Bikomponentencrimpfasern können z.B. über Chisso Corporation in Japan und gecrimpte Polyesterstapelfasern vom Spiraltyp bei Gepeco in USA bezogen werden.

Bei der Erfindung können Stapelfasern eingesetzt werden, die aus Naturfasern und/oder Chemiefasern ausgewählt sind. Beispiele für Chemiefasern sind insbesondere Polyolefine und Polyester. Beispiele für Naturfasern sind Cellulose, Holzfasern, Kapok, Flachs.

Die Faservlieslage der Erfindung besteht dabei aus lose abgelegten Fasern bzw. Filamenten. Die Verfahren zum Ablegen sind aus dem Stand der Technik der Vliesstoffe bekannt. Bei der Vliesstoffherstellung werden dabei die Hauptprozessstufen Rohstoffaufbereitung -> Vliesbildung -> Vliesverfestigung -> Vliesstoffveredelung durchlaufen. Der bei der Vliesbildung erzeugte, lockere, noch ungebundene Faserflor wird dabei Faservlies (web) genannt (siehe Vliesstoffe, W. Albrecht, H. Fuchs, W. Kittelmann, Wiley-VCH, 2000). Durch den Vliesbindeschritt entsteht aus dem Faservlies der Vliesstoff, der eine ausreichende Festigkeit aufweist, um z.B. zu Rollen aufgewickelt zu werden. Dieser letztgenannte Schritt erfolgt somit bei der Herstellung der Faservlieslage nach der Erfindung nicht, stattdessen wird das Faservlies an eine Vliesstofflage gebunden.

Der Filterbeutel gemäß der Erfindung unterliegt in Bezug auf die Anordnung der Lagen und die Anzahl der Lagen in soweit keinen Einschränkungen mit der Maßgabe, dass jeweils mindestens zwei Lagen aus einer Vliesstofflage und mindestens einer Faservlieslage bestehen, wobei diese zwei Lagen durch eine Schweißverbindung, bevorzugt durch eine Ultraschweißverbindung, wie vorstehend beschrieben, durchgängig miteinander verbunden sind. Die Vliesstofflage des vorstehend beschriebenen Verbundes ist dabei bevorzugt eine Stütz- bzw. Trägerlage und weist eine flächenbezogene Masse von mindestens 5 g/m$^2$ auf. Als Vliesstofflage selbst wird günstigerweise ein Scrim verwendet. Unter einem Scrim wird dabei jedes luftdurchlässige Material verstanden, dass als Träger- oder Verstärkungsschicht dienen kann. Es kann ein Vliesstoff, ein gewebtes Material oder ein Netting sein. Vorzugsweise besteht es aus einem thermoplastischen Polymer, um die Verschweißbarkeit mit der Faservlieslage zu vereinfachen. Beispiele für Scrims sind Spinnvliese. Es können aber auch trocken oder nass gelegte Vliesstoffe sein, die eine ausreichende mechanische Stabilität besetzen. Die flächenbezogene Maße einer derartigen Vliesstofflage liegt gemäß der vorliegenden Erfindung bevorzugt zwischen 10 und 200 g/m$^2$, besonders bevorzugt zwischen 20 bis 100 g/m$^2$. Die flächenbezogene Masse in g/m$^2$ wurde dabei nach DIN EN 29073-1 bestimmt. In Bezug auf die flächenbezogene Masse der Faservlieslage ist zu erwähnen, dass diese indirekt über den Verbund aus der Vliesstofflage und der Faservlieslage bestimmt worden ist, da die Bestimmung der flächenbezogenen Masse der Faservlieslage alleine aufgrund ihrer losen Struktur nicht möglich ist. Die Ermittlung erfolgte deshalb durch ein Subtraktionsverfahren, d.h. es wurde die flächenbezogene Masse des gesamten Verbundes, d.h. des Verbundes aus der Vliesstofflage und der Faservlieslage, ermittelt und dann die flächenbezogene Masse der Vliesstofflage, die sich getrennt ermitteln lässt, wieder abgezogen.

Die Dicke des vorstehend beschriebenen Verbundes aus der Vliesstofflage und der Faservlieslage liegt zwischen 1 und 7 mm, bevorzugt zwischen 2 und 4 mm. Die Bestimmung der Dicke erfolgte dabei nach EDANA 30.5-99 Pkt. 4.2. Als Gerät wurde dabei ein VDM 01, zu beziehen bei der Karl Schröder KG in Weinheim, verwendet. Da die Messungen nach Verfahren 4.1, 4.2 oder 4.3 zu sehr unterschiedlichen Ergebnissen führten, wurden die Messungen der erfindungsgemäßen Verbunde, d.h. Komposite, prinzipiell nach Verfahren 4.2 durchgeführt.

Der erfindungsgemäße Filterbeutel kann selbstverständlich, wie vorstehend beschrieben, außer dem Verbund aus der Vliesstofflage und der Faservlieslage weitere Lagen aufweisen. So kann ein erfindungsgemäßer Filterbeutel z.B. aus drei Lagen aufgebaut sein, wobei hier die Faservlieslage dann sandwichartig zwischen zwei Vliesstofflagen, die dann als Stütz- bzw. Trägerlage fungieren, eingeschlossen ist. Der Filterbeutel nach der Erfindung kann weiterhin wie nach den Anforderungen noch weitere Feinfilterlagen mit unterschiedlichen Filtereigenschaften aufweisen. Als Feinfilterlagen werden hierbei Feinfilter-Spinnvlieslagen verwendet. Feinfilter-Spinnvlieslagen im Sinne der Erfindung sind entsprechende Lagen, die geeignet sind, feine Partikel abzuscheiden. Gebräuchliche Feinfaser-Spinnvliesstoffe entstehen nach dem Schmelzblas-Spinnvliesverfahren (Meltblowingprocess), dem Verdampfungs-Spinnvliesverfahren (Flashspinning-process) oder dem Elektrostatic-Spinnvliesverfahren (Electrostatic spunbonding). Auf das Buch Vliesstoffe von W. Albrecht, H. Fuchs, W. Kittelmann, Wiley-VCH 2000, Kapitel 4, wird inhaltlich verwiesen. Im Sinne der Erfindung können Feinfilterlagen aber auch aus trocken gelegten Vliesstoffen aus elektrostatisch geladenen Fasern bestehen.

Der Filterbeutel nach der Erfindung ist dabei bevorzugt durch eine durchgängige Ultraschallschweißverbindung durch alle Lagen, d.h. durch die Vliesstofflage und die Faservlieslage sowie die weiteren Lagen, miteinander verbunden. Der Filterbeutel nach der Erfindung umfasst aber auch Ausführungsformen, bei denen lediglich Schweißverbindungen der Vliesstofflage mit der Faservlieslage vorliegen und die weiteren Lagen entweder durch Kleben oder durch ein weiteres Verbindungsverfahren mit dem Verbund aus der Vliesstofflage und der Faservlieslage verbunden sind. Die Erfindung umfasst auch Ausführungsformen, z.B. in Form eines dreilagigen Aufbaus, wobei dann die weitere Lage lediglich lose auf dem Verbund auf der Faservlieslage und der Vliesstofflage zu liegen kommt und nur eine randseitige Verbindung durchgeführt wird.

Der Filterbeutel nach der Erfindung ist insbesondere als Staubfilterbeutel geeignet.

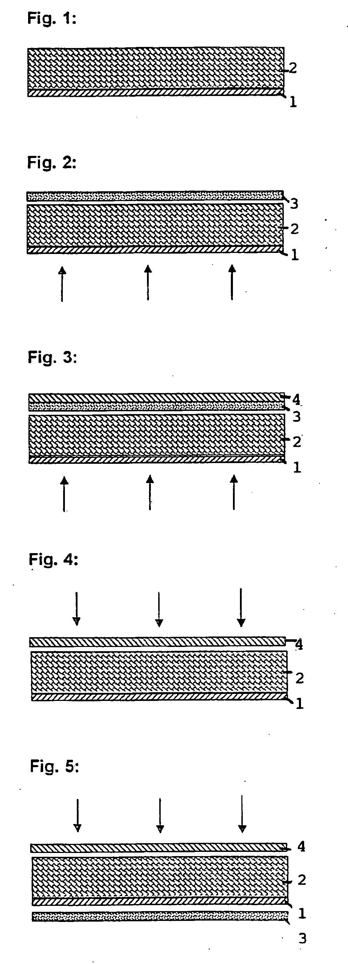

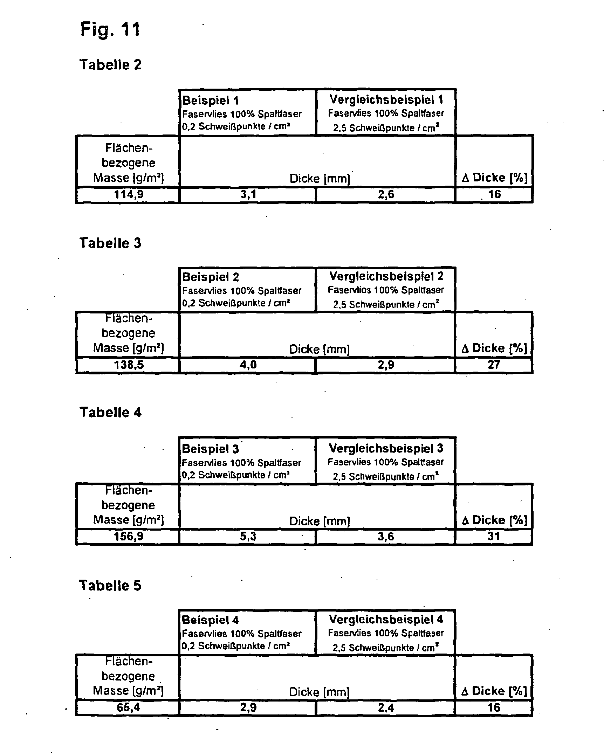

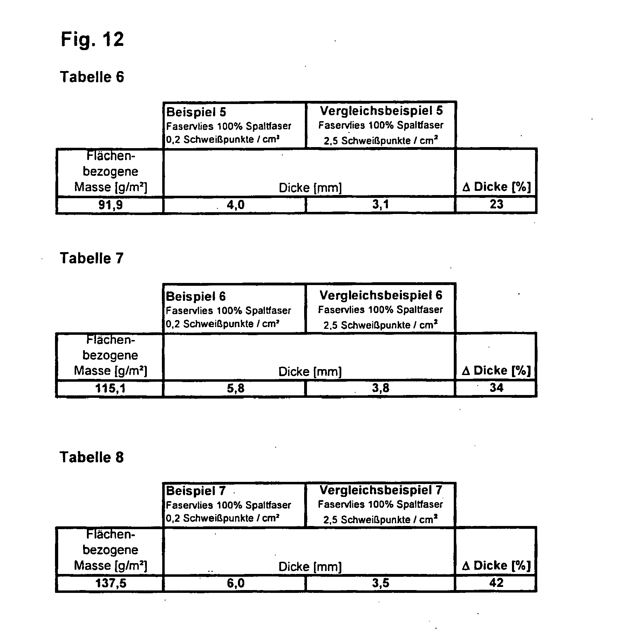

Die Erfindung wird nachfolgend anhand der Figuren 1 bis 14 näher erläutert.

Die Figuren 1 bis 9 zeigen schematisch ausschnittsweise, wie das Filtermaterial des erfindungsgemäßen Filterbeutels aufgebaut sein kann.

Figur 1 zeigt dabei einen zweilagigen Aufbau aus einer Lage 1 in Form einer Vliesstofflage, die in der Figur 1 ein Scrim ist. Diese Scrimlage 1 ist durch Ultraschallschweißverbindungen mit einer Faservlieslage 2 verbunden. In Figur 1 ist die weitere gemäß der Erfindung geforderte Lage nicht abgebildet.

Die Struktur des Aufbaus der in Figur 2 dargestellten Ausführungsform entspricht im Wesentlichen der aus Figur 1, jedoch mit einer zusätzlichen Lage eines Feinfiltermediums 3, die hier die dritte Lage darstellt. Die bevorzugte Anströmseite ist durch Pfeile gekennzeichnet. Die Feinfilterlage 3 besteht dabei z.B. aus einem Melt-Blown-Vlies.

Figur 3 zeigt wiederum ein weiteres Beispiel, ausgehend von der Figur 2, mit einer zusätzlichen Schutzlage 4, die hier abströmseitig angeordnet ist. Diese Schutzlage 4 kann ein Scrim sein, bevorzugt ein Spinnvlies.

Die Ausführungsform, die in der Figur 4 gezeigt ist, ist aus einer Lage eines Vliesstoffes 1 mit einer durch Verschweißung daran befestigten Faservlieslage 2, wie vorstehend beschrieben, verbunden, wobei hier noch zusätzlich anströmseitig eine Lage eines Schutzvlieses 4 vorgeschaltet ist. Der Vliesstoff 1 ist hierbei insbesondere ein Melt-Blown-Vliesstoff.

Figur 5 unterscheidet sich von Figur 4 durch eine zusätzliche abströmseitig angeordnete Mikrofaservliesstofflage 3.

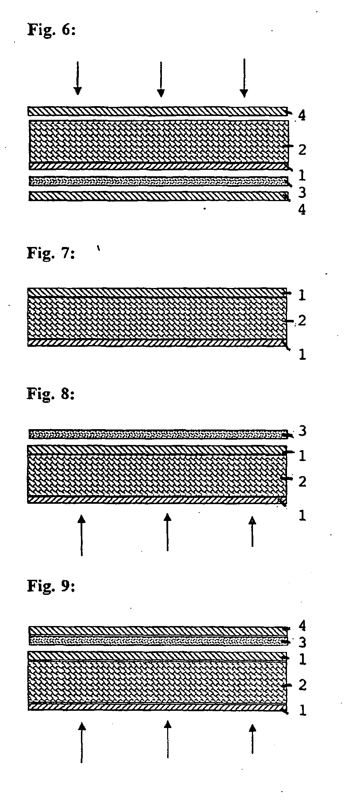

Das Beispiel der erfindungsgemäßen Struktur, die in der Figur 6 gezeigt ist, geht von dem Aufbau nach Figur 5 aus, weist jedoch dann hier abströmseitig eine zusätzliche Schutzlage 4 auf.

Figur 7 zeigt nun ein Laminat aus 2 Lagen durch Ultraschallschweißpunkte miteinander verbundenen Lagen Vliesstoff 1, zwischen dem sich die Faservlieslage 2 befindet.

Figur 8 gibt eine Ausführungsform der erfindungsgemäßen Struktur wieder, die von der Figur 7 ausgeht, jedoch hier nun mit einer abströmseitig angeordneten Lage eines Filtermediums 3.

Figur 9 zeigt eine Struktur, die von Figur 8 ausgeht, mit einer zusätzlichen Lage 4 abströmseitig. In den vorstehend beschriebenen Figuren 1 bis 9 sind die jeweiligen Aufbauten lediglich schematisch der Schichtenfolge nach beschrieben. Die vorstehend beschriebenen Aufbauten sind bevorzugt dann durch Ultraschallschweißverbindungen miteinander verbunden.

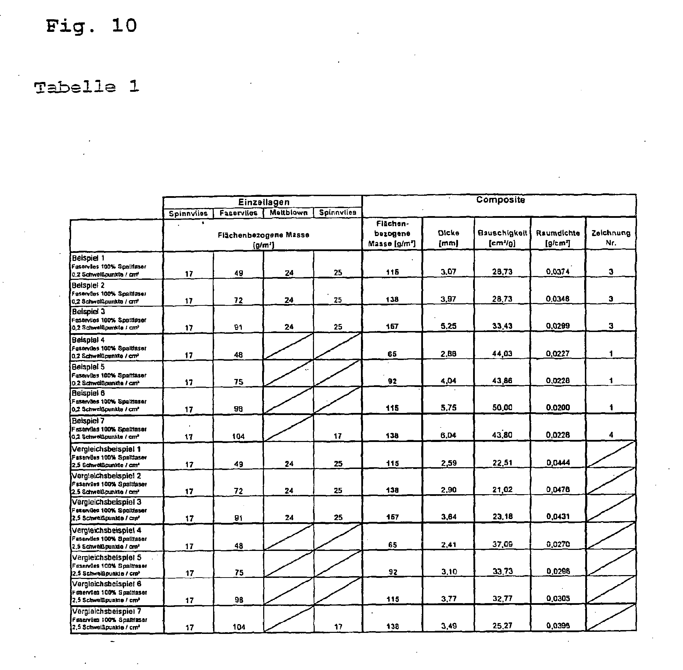

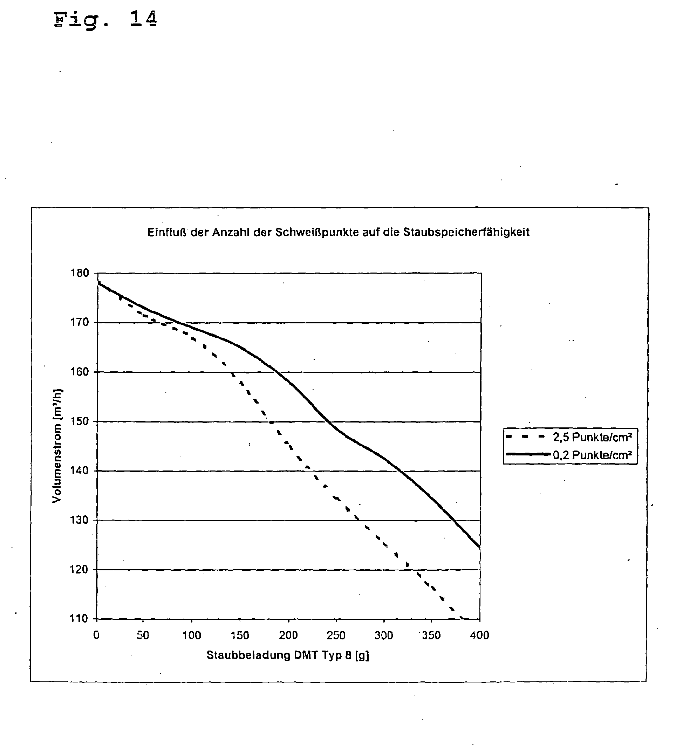

In den Tabellen 1 bis 11 (Figuren 10 bis 12) sind nun die Messergebnisse zusammengefasst, die mittels den in den vorstehend beschriebenen Ausführungsformen nach den Figuren 1, 3 und 4 erzielt worden sind, im Vergleich mit einer Ausführungsform nach der EP 1 197 252 A1. Bei den Beispielen nach den Figuren 1, 3 und 4 wurde ein Verbund eingesetzt, der 0,2 Schweißpunkte pro cm$^2$ aufweist. Bei den Vergleichsbeispielen wurden 2,5 Schweißpunkte pro cm$^2$ gewählt. Wie aus den Tabellen 1 bis 11 hervorgeht, zeichnen sich die erfindungsgemäßen Materialien insbesondere dadurch aus, dass sie 15 bis 42 % dicker sind als die Vergleichsmaterialien. Es ist dabei besonders darauf hinzuweisen, dass dies dazu führt, dass die Bauschigkeit der erfindungsgemäßen Materialien ebenfalls um eine entsprechende Größe, nämlich um 15 bis 42 %, höher ist, als bei den Vergleichsbeispielen. Auf dieser extrem hohen Bauschigkeit beruht nun der überlegene Effekt der erfindungsgemäßen Materialien, die damit ein überdurchschnittlich hohes Staubspeichervermögen aufweisen (siehe auch Figur 14).

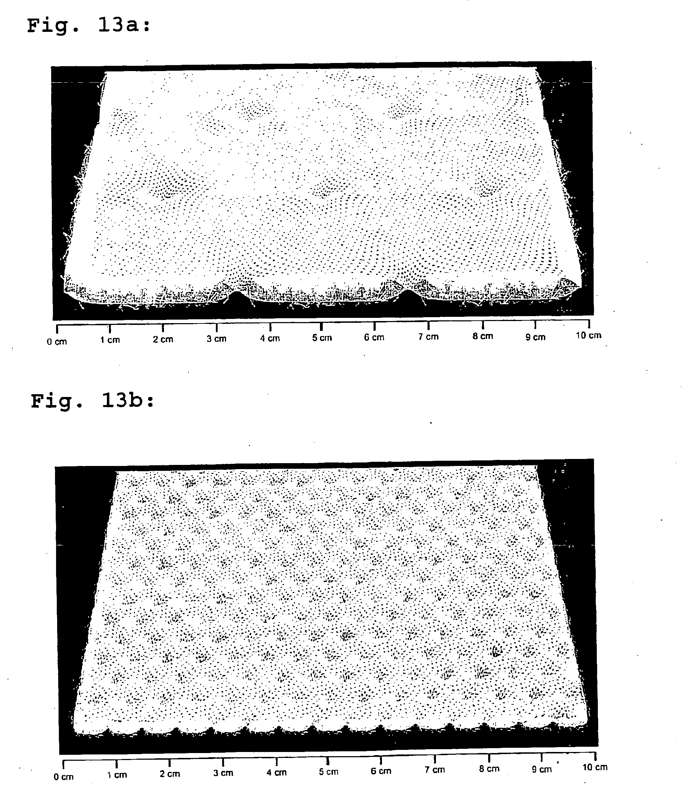

Figur 13a zeigt nun in Form einer 3D-Grafik, wie sich die geringe Anzahl der Schweißpunkte auf die Struktur des Materials auswirkt. In Figur 13a ist dabei ein Material gezeigt, wie es dem Aufbau nach Figur 7 entspricht, d.h. es ist ein Material, das aus einer Faservlieslage besteht, die zwischen zwei Lagen aus Spinnvlies durch Ultraschallschweißverbindungen verbunden ist. Im Beispielsfall nach der Figur 13a wurden ca. 0,2 Schweißpunkte pro cm$^2$ verwendet. Figur 13a zeigt anschaulich die kissenartige Ausbildung, die zu der hohen Bauschigkeit wie vorstehend beschrieben, führt. Bei dem Beispielsfall nach Figur 13a wurden dabei als Faservlieslage 100 % Spaltfasern aus Polypropylen eingesetzt. Das Spinnvlies besteht ebenfalls aus Polypropylen. Der Aufbau des in der Figur 13b dargestellten Filtermediums entspricht analog dem, wie er in Figur 13a schon beschrieben worden ist, jedoch mit dem Unterschied, dass hier 2,5 Schweißpunkte pro cm$^2$ vorhanden sind. Dies macht deutlich, dass durch die erfindungsgemäße Ausbildung in Form einer niedrigen Anzahl von Schweißverbindungen ein deutlicher Vorteil in Bezug auf die Bauschigkeit des Materials erreicht wird.

Wie nun in Figur 14 dargestellt ist, führt die erfindungsgemäße Ausgestaltung zu einer deutlichen Erhöhung des Staubspeichervermögens gegenüber den Filtermedien, wie sie im Stand der Technik beschrieben sind, die 2,5 Schweißpunkte pro cm$^2$ aufweisen. Die in der Figur 14 dargestellten Messergebnisse wurden wie folgt durchgeführt:

| | |
|---|---|
| **Verwendeter Staubsauger:** | Miele Performance 2300 |
| | Typ: HS 05 |
| | Modell: S749 |
| | Nr.:71683038 |
| **Leistungseinstellung:** | Maximum |
| **Größe der Filtertüten:** | 295 mm x 270 mm |
| **Prüfstaub:** | DMT Typ8 |

**Prüfablauf:** Der zu prüfende Staubbeutel wird, nachdem das Gerät 10 Minuten warmgelaufen ist, in das Gerät eingebaut. Der Volumenstrom ohne Staubbeladung wird nach 1 min. Laufzeit des Gerätes abgelesen. Anschließend wird die erste Staubportion von 50 g innerhalb von 30 sek eingesaugt. Nach 1 min. wird der sich einstellende Volumenstrom (in m$^3$/h) abgelesen. Dieser Schritt wird für die folgenden Staubzugaben entsprechend wiederholt, bis 400 g Staub zugegeben worden sind.

**Filtermedium:**

Spinnvlies 17 g/m$^2$ , Faservlies 50 g/m$^2$,
Spinnvlies 17 g/m$^2$

**Schweißmuster:**

1. 2,5 Punkte/cm$^2$, gleichmäßig verteilt
2. 0,2 Punkte/cm$^2$, gleichmäßig verteilt

Die in den Beispielen wiedergegebenen Messwerte wurden durch die folgenden Bestimmungsmethoden ermittelt:

Dicke:

EDANA 30.5-99 Pkt. 4.2, Gerät: VDM 01, zu beziehen bei der Karl Schröder KG, Weinheim.

Da die Messungen nach Verfahren 4.1, 4.2 oder 4.3 zu sehr unterschiedlichen Ergebnissen führen, wurden die Messungen der erfindungsgemäßen Laminate prinzipiell nach Verfahren 4.2 (for bulky nonwovens with a maximum thickness oF 20 mm) durchgeführt.

Flächenbezogene Masse [g/cm$^2$l: DIN EN 29073-1

Bauschigkeit (bulk) [cm$^3$/g] :
Dicke (EDANA 30.5-99 Pkt. 4.2)/Flächenbezogene Masse (DIN EN 29073-1)

Rohdichte (bulk density) [g/cm$^3$l:
Flächenbezogene Masse (DIN EN 29073-1)
Dicke (EDANA 30.5-99 Pkt. 4.2)

In Figur 15 ist schematisch das Messprinzip zur Ermittlung der durchschnittlichen Totalporosität und des Medians des Porendurchmessers illustriert.

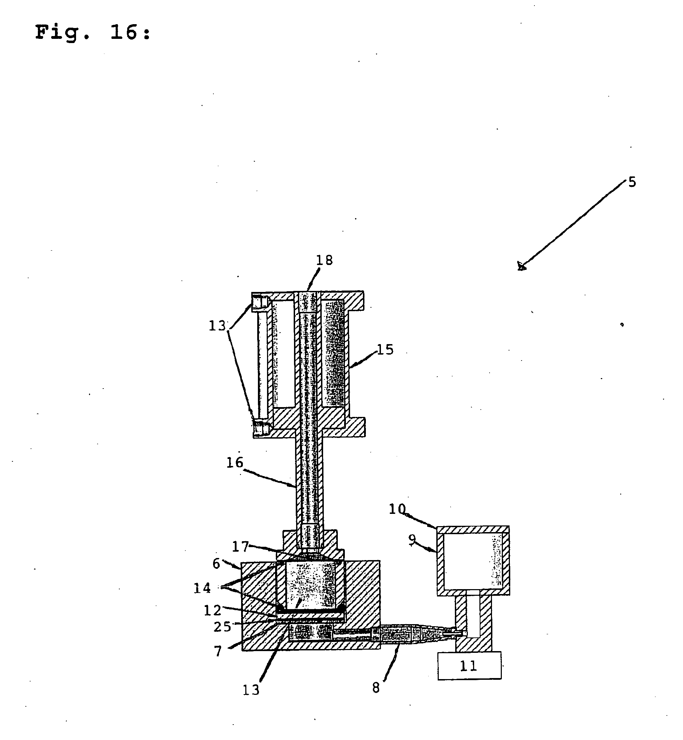

Figur 16 zeigt eine Vorrichtung, die bei der Bestimmung der durchschnittlichen Totalporosität und des Medians des Porendurchmessers zum Einsatz kommt.

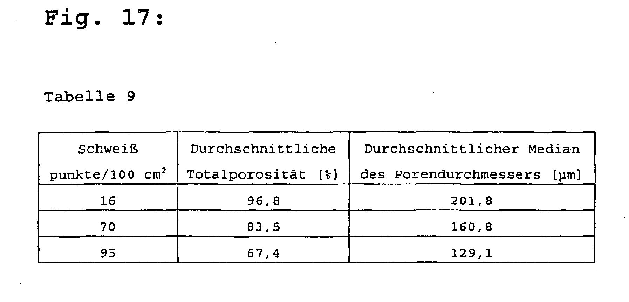

Tabelle 9 (Figur 17) gibt die Messwerte bezüglich der durchschnittlichen Totalporosität und des Medians des Porendurchmessers wieder.

Die Messwerte wurden dabei nach dem unten angegeben Verfahren ermittelt.

Zur Bestimmung der durchschnittlichen Totalporosität und des Medians des Porendurchmessers wurde die Methodik der Extrusion einer Benetzungsflüssigkeit verwendet. Die Messungen erfolgten mittels eines PMI-Flüssigkeits-Extrusions-Porosimeters. Im Folgenden wird dazu auf die Figuren 15 und 16 Bezug genommen.

1. Messprinzig

Da die freie Oberflächenenergie des Systems Benetzungsflüssigkeit 20/Probe 12 geringer ist als die freie Oberflächenenergie des Systems Luft/Probe 12 füllen sich die Poren einer Probe spontan mit Benetzungsflüssigkeit 20. Dabei kann die Benetzungsflüssigkeit 20 aus den Poren durch Erhöhung des differentiellen Drucks 22 eines Inertgases 18 auf die Probe 12 entfernt werden. Es wurde gezeigt, dass der benötigte differentielle Druck 22, um die Benetzungsflüssigkeit 20 aus einer Pore zu verdrängen, durch die Größe der Pore bestimmt wird (Akshaya Jena, Krishna Gupta, "Characterization of Pore Structure of Filtration Media", Fluid Particle Separation Journal, 2002, 4 (3), S. 227-241). Die Korrelation zwischen dem differentiellen Druck 22 des Inertgases 18 und der Porengröße wird durch Gleichung 1 wiedergegeben,

$$p = 4 \, \gamma \, \cos \, \theta \, / \, D \qquad\qquad (1)$$

wobei p der differentielle Druck 22 eines Inertgases auf die Probe, y die Oberflächenspannung der Benetzungsflüssigkeit 20, θ der Kontaktwinkel der Benetzungsflüssigkeit 20 auf der Porenoberfläche und D der Porendurchmesser ist, dessen Definition für einen unregelmäßigen Querschnitt durch folgende Gleichung (2) wiedergegeben wird.

$$D = 4 \, (\text{Querschnittsfläche})/(\text{Querschnittsumfang}) \qquad (2)$$

Wenn die Probe 12 auf eine Membran 25 aufgebracht ist und die Poren der Probe 12 und der Membran 25 mit einer Benetzungsflüssigkeit 20 gefüllt sind, führt die Applikation eines Drucks 23 auf die Probe 12 zu einer Verdrängung 23 der Flüssigkeit aus den Poren der Probe 12 und zu einem Ausfließen 24 der Flüssigkeit 20 durch die Membran 25. Falls die größte Pore der Membran 25 kleiner als die kleinste Pore von Interesse der Probe 12 ist, wird zwar die Flüssigkeit 20 aus den Poren von Interesse der Probe 12 verdrängt und aus der Membran 25 ausfließen, jedoch wird der Druck 22 nicht ausreichen, um die Flüssigkeit 20 vollständig aus den Poren der Membran 25 zu entfernen, das Gas wird nicht in der Lage sein, durch die flüssigkeitsgefüllten Poren der Membran 25 hindurch auszuströmen. Somit kann über den differentiellen Druck 22 und das ausgeflossene Volumen der Flüssigkeit 20 der Durchmesser bzw. das Volumen der Poren bestimmt werden (A. Jena und K. Gupta, "A Novel Technique for Pore Structure Characterization without the Use of Any Toxic Material", Nondestructive Characterization of Materials XI, Hrsg.: Robert E. Green, Jr., B. Boro Djordjevic, Manfred P. Hentschel, Springer-Verlag, 2002, S. 813-821).

2. Versuchsaufbau

Dem PMI-Flüssigkeits-Extrusions-Porosimeter 5 (Figur 16) liegt die Methodik der Flüssigkeits-Extrusion zugrunde. Die Probenkammer 6 des Porosimeters 5 besteht dabei aus einem zylinderförmigen PVC-Behälter, dessen Durchmesser 45 mm und dessen Tiefe 45 mm beträgt. Ein relativ weitmaschiges, offenes, aus rostfreiem Stahldraht gefertigtes Netz 7 liegt auf einer Leiste am Boden der Probenkammer 6 auf. Unterhalb des Netzes 7 ist die Probenkammer 6 bis über einen wenige mm im Durchmesser betragenden flexiblen Schlauch 8 mit der Unterseite eines zylinderförmigen Acrylgefäßes 9, dessen Durchmesser 40 mm und dessen Tiefe 40 mm beträgt, verbunden. Das Gefäß 9 sowie seine Abdeckung 10 sind dabei auf einer Waage 11 (Hersteller: Mettler, Gewichtsauflösung 0,0001 g) aufgebracht. Ein zylinderförmiger Einsatz 13 (40 mm Durchmesser, 40 mm Höhe) wird auf der Probe 12 innerhalb der Probenkammer 6 aufgebracht. Die obere Seite des Einsatzes 13 weist dabei eine Kerbe für einen O-Ring 14 auf. Eine pneumatisch betriebene Vorrichtung 15, die einen in einem Zylinder geführten Kolben 16 aufweist, wird auf die Probekammer 6 montiert. Der Kolben 16 ist hohl, um einen Durchfluss des Testgases 18 in die Probenkammer 6 zu gewährleisten. Eine flache Scheibe 17 aus rostfreiem Stahl, die an die Unterseite des Kolbens 16 angeschweißt ist, drückt den Einsatz 13 gegen den O-Ring 14 auf der Oberseite des Einsatzes 13 an und verhindert so ein Entweichen von Testgas 18. Die Steuerung des Kolbens 16 erfolgt pneumatisch. Dabei erfolgt eine separate Einspeisung des Testgases 18 und des Gases 19 zum Betreiben des Kolbens 16.

3. Benetzungsflüssigkeit

Bei allen Versuchen wurde als Benetzungsflüssigkeit Galwick verwendet, ein perfluoriertes Polymer (oxidiertes und polymerisiertes 1,1,2,3,3,3,-Hexafluorpropen). Die Flüssigkeit ist inert, die Oberflächenspannung beträgt 16 Dynes/cm. Wegen der sehr geringen Oberflächenspannung der Testflüssigkeit liegt der Kontaktwinkel nahe bei 0˚ (Vibhor Gupta und A.K. Jena, "Substitution of Alcohol in Porometers for Bubble Point Determination", Advances in Filtration and Separation Technology, American Filtration and Separation Society, 1999, 13b, S. 833-844).

4. Testgas

Bei allen Versuchen wurde trockene und gereinigte komprimierte Luft verwendet. Zur Entfernung von festen Partikeln wurde die Luft gefiltert, die Feuchtigkeit wurde durch die dem Fachmann aus dem Stand der Technik bekannten Standardtrocknungsverfahren entfernt.

5. Automatisierte Testausführung, Datenerfassung und -management

Die Testausführung, Datenerfassung sowie die Datenreduktion wurden voll automatisiert durch die Verwendung eines Computers und einer geeigneten Software ausgeführt. Die Ausführung der Testprozedur nach Beladen der Probekammer 6 mit einer Probe 12 erfolgte automatisch, so dass akkurate und reproduzierbare Ergebnisse erhalten werden konnten.

6. Testprozedur

a) Vorbereitung des Messinstruments

Die Probenkammer 6, das Gefäß 9 auf der Waage 11, das Netz 7 am Boden der Probekammer 6 und der Einsatz 13 wurden zur Entfernung von Verunreinigungen mit Alkohol gesäubert. Die O-Ringe 14 wurden ebenfalls gesäubert und gefettet. Eine Millipormembran 25 mit einem maximalen Porendurchmesser von 0,45 $\mu$m, wurde auf das Netz 7 aufgebracht. Dabei ist darauf zu achten, dass die Membran 25 unbeschädigt ist, d.h. keine Defekte, Risse oder sonstigen Beschädigungen aufweist, da dies sonst zu Verfälschungen des Messergebnisses führen kann. Nun wurde Benetzungsflüssigkeit 20 in das Gefäß 9 gegeben, die über den Schlauch 8 in die Probenkammer 6 fließt. Dabei wurde so viel Benetzungsflüssigkeit 20 zugegeben, dass ein Flüssigkeitsstand in der Probenkammer 6 erreicht wird, so dass die Flüssigkeit 20 das Netz 7 gerade vollkommen bedeckt. Dadurch ist eine vollkommene Benetzung der Membran gewährleistet. Nach einer gewissen Zeit stellte sich eine Konstanz der Anzeige der Waage 11 ein, woran das Erreichen eines stationären Zustands erkannt werden konnte.

b) Vorbereitung der Proben

Für die Messung wurden Filterbeutel aus einem Filterbeutelmaterial verwendet, das aus einem Verbund aus einer zwischen 2 Vliesstofflagen eingeschlossenen Faservlieslage besteht. Die Vliesstofflagen (Spunbondlagen) sind aus Polypropylenfasern gebildet. Die Faservlieslage besteht aus Polypropylen-Stapelfasern (Splitfasern mit 60 mm Länge). Das Filtermaterial ist dabei durch punktförmige Schweißverbindungen, die mittels Ultraschallschweißen eingebracht werden, verbunden. Es wurden 3 Proben untersucht mit einer unterschiedlichen Anzahl an Schweißpunkten, nämlich 16, 70 und 95, jeweils bezogen auf 100 cm$^2$, die gleichmäßig über die Oberfläche verteilt sind. Aus den Filterbeuteln wurden dann kreisförmige Proben 12 von 45 mm im Durchmesser ausgestanzt. Die Proben 12 wurden gewogen und die Dicke nach EDANA 30.5 - 99 Pkt. 4.2 bestimmt (siehe hierzu S. 8, z. 3-13), wobei sich nur schwer Aussagen über die Dicke treffen ließen, was auf die weiche Natur und die unebene Oberfläche der Probe 12 zurückzuführen ist. Die Rohdichte $\rho_b$ wurde errechnet. Diese Rohdichte entspricht der der trockenen Probe. Die Oberschicht der Probe 12 wurde mit einem Messer (Stanley-Messer) eingeritzt. Jeder Schnitt war 10 mm lang und 1 mm breit. Um eine angemessene Anzahl von Schnitten herauszufinden, wurden Proben 12 mit einer unterschiedlichen Zahl von Schnitten untersucht. Basierend auf den Ergebnissen, die mit diesen Proben 12 erhalten wurden, wurde gefunden, dass fünf Schnitte pro Probe 12 angemessen sind; somit wurden alle Untersuchungen mit fünf Schnitten pro Probe 12 ausgeführt. Die Anordnung der fünf Schnitte erfolgte dabei in Analogie zur Anordnung der Punkte bei einer Fünf auf einem Würfel.

c) Benetzung und Beladung der Probe

Die Probe wurde in ein Benetzungsflüssigkeit 20 enthaltendes Gefäß eingebracht. Dabei absorbierte die Probe 12 die Benetzungsflüssigkeit 20 und zeigte eine Tendenz zum Quellen. Dabei wurde darauf geachtet, die Probe 12 nicht komplett in die Flüssigkeit 20 einzutauchen, um Lufteinschlüsse in der Probe 12 zu vermeiden. Die benetzte Probe 12 wurde im Anschluss auf die Membran 25 innerhalb der Probenkammer 6 aufgebracht. Der O-Ring 14 wurde auf die Probe 12 und der Einsatz 13 auf den O-Ring 14 aufgebracht.

d) Durchführung des Tests

Alle die Probe 12 betreffenden Informationen einschließlich der Identifikationsnummer wurden in einem Computer gespeichert. Die Einheiten sowie die verschiedenen zu messenden Funktionen wurden ebenso eingegeben. Im Anschluss daran wurde der Test durchgeführt.

Der Kolben 16 wurde computergesteuert abgesenkt, um den Einsatz 13 auf den O-Ring 14 zu drücken. Zur Vermeidung von Leckagen wurde ein vorbestimmter Druck auf den O-Ring 14 angelegt. Die Waage 11 wurde tariert. Im Anschluss wurde langsam das Testgas 18 durch den Kolben 16 zur Oberfläche der Probe 12 eingeleitet. Der Gasdruck 22 wurde computergesteuert, in kleinen Inkrementen erhöht, somit wurde eine Einstellung eines Gleichgewichts des Systems vor Aufzeichnung der Daten erreicht. Der Computer speicherte die Daten des Drucks und der Gewichtsänderung der Flüssigkeit mittels der Waage 11. Die Ergebnisse wurden ebenso graphisch dargestellt, um den Fortschritt des Tests zu verfolgen. Zum Erhalt der Ergebnisse am Ende des Tests wurden die Daten in verschiedener Weise ausgedruckt.

7. Ergebnisse

Die Messvorrichtung 5 zeichnete über die Waage 11 die Zunahme des Gewichts der Benetzungsflüssigkeit 20, die aus der Probe 12 verdrängt wurde, auf und errechnete das Gewicht der Flüssigkeit 20 über die Dichte in das entsprechende Volumen um. Dieses Ergebnis repräsentiert das kumulative Porenvolumen. Ebenso wurde aus dem durch die Messvorrichtung 5 bestimmten Gasdruck des Testgases 18, das zur Verdrängung der Benetzungsflüssigkeit 20 aus den Poren der Probe 12 verwendet wurde, der Porendurchmesser errechnet. Somit konnte das kumulative Porenvolumen als Funktion des Porendurchmessers aufgezeichnet werden. Die Porosität P (in %) wurde aus der Rohdichte, $\rho_b$ und dem totalen Porenvolumen V gemäß Gleichung (3) errechnet werden.

$$P = (V\ \rho_b)\times100 \qquad\qquad (3)$$

Über die Messvorrichtung 5 konnte ebenso der Median des Porendurchmessers errechnet werden. Der Median des Porendurchmessers ist so definiert, dass 50 % des Gesamtporenvolumens aus Poren herrührt, die größer als die mittlere Pore und 50 % des Gesamtporenvolumens aus Poren herrührt, die kleiner als die mittlere Pore sind. Das arithmetische Mittel von mehreren Messungen der verwendeten Proben ist in Tabelle 9 (Figur 17) wiedergegeben. Wie aus Tabelle 9 hervorgeht, weist das erfindungsgemäße Filtermaterial des Beutels eine extrem hohe durchschnittliche Totalporosität von bis zu 96,8 % auf. Mit zunehmender Anzahl an Schweißverbindungen sinkt die Totalporosität dann ab auf einen Wert von 67.4 %. Entsprechend verringert sich der durchschnittliche Meridian des Porendurchmessers von 201,8 $\mu$m auf 129,1 $\mu$m. Wie die Ergebnisse zeigen, weisen die erfindungsgemäßen Filtertüten eine extrem hohe Porosität auf, was letztlich zu einem überdurchschnittlichen Staubspeichervermögen führt.

8. Diskussion der Messmethode

Bei der verwendeten Messmethodik wird der Porendurchmesser und das Porenvolumen einer Probe aus dem gemessenen Gasdruck, der zur Verdrängung der Benetzungsflüssigkeit aus den Poren benötigt wird, sowie dem gemessenen Volumen der verdrängten Flüssigkeit aus den Poren errechnet. Die Poren in den oben und unten angebrachten Vliesstofflagen (Spunbondlagen) der Probe sind viel kleiner als die Poren der Faserflieslage in der Mittellage. Aus Gleichung 1 ist ersichtlich, dass der Gasdruck, der benötigt wird, um eine Flüssigkeit aus den oben und unten aufgebrachten Lagen zu verdrängen, viel höher sein muss als derjenige, der für die Faservlieslage benötigt ist. Bei der Untersuchung der Filterbeutel wird eine Verdrängung der Flüssigkeit 20 aus den Poren der mittleren Faservlieslage nur dann erfolgen, nachdem die Flüssigkeit aus den Poren der oben aufgebrachten Spunbondschicht erfolgt ist. Der hohe Druck, der benötigt wird, um die Flüssigkeit aus den kleinen Poren der oben aufgebrachten Spunbondschicht zu verdrängen, wird ebenso Flüssigkeit aus den größeren Poren der mittleren Faservlieslage verdrängen; somit wird der Durchmesser der kleinen Poren der oben aufgebrachten Spunbondschicht als der Durchmesser der Poren in der Faservlieslage als mittlere Lage gemessen. Das bestimmte Porenvolumen wird nahe am Porenvolumen der mittleren Lage liegen, da das Volumen der kleinen Poren in der sehr dünn ausgeprägten oben und unten aufgebrachten Schichten vernachlässigbar, verglichen mit dem großen Volumen der großen Poren in der dicken Mittelschicht ist.
Die Testprozedur, die bei dieser Untersuchung verwendet wurde, beinhaltet auch das Anbringen von mehreren Schnitten auf der Oberschicht. Durch die Schnitte wurden in die Oberschicht große Öffnungen eingefügt, so dass das Testgas an den kleinen Poren der Oberschicht passieren konnte. Dabei erfolgte keine Messung des Durchmesser und des Volumens der kleinen Poren in der Oberschicht. Somit erfolgte die Verdrängung der Flüssigkeit aus der Mittelschicht bei kleinen Drücken, die mit den großen Poren in der Faservlieslage korrelieren. Die als Unterschicht aufgebrachte Spunbondschicht beeinflusste den Test nicht, da die Flüssigkeit, die aus den Poren der Faservlieslage über Gasdruck verdrängt wurde, einfach durch die untere Spunbondschicht durchfloss und der Gasdruck somit nicht geeignet war, um Flüssigkeit aus der Unterschicht zu verdrängen. Somit wurden der Durchmesser und das Volumen von den Poren in der Faservlieslage mit diesem Test ermittelt.

**Patentansprüche**

1.  Filterbeutel für einen Staubsauger aus einem Filtermaterial umfassend mindestens drei Lagen, wobei mindestens zwei Lagen, die aus mindestens einer Vliesstofflage und mindestens einer Faservlieslage, enthaltend Stapelfasern und/oder Filamente, bestehen, durch eine Schweißverbindung verbunden sind, mit der Maßgabe, dass der Pressflächenanteil des Schweißmusters maximal 5 % der Oberfläche der durchströmbaren Fläche des Filterbeutels beträgt und dass, bezogen auf die gesamte durchströmbare Fläche des Filterbeutels, durchschnittlich maximal 10 Schweißverbindungen pro 10 cm$^2$ vorhanden sind.

2.  Filterbeutel nach Anspruch 1,
    **dadurch gekennzeichnet, dass** die durchschnittliche Totalporosität mindestens 65 % beträgt.

3.  Filterbeutel nach einem der vorhergehenden Ansprüche
    **dadurch gekennzeichnet, dass** die durchschnittliche Totalporosität mindestens 80 % beträgt.

4.  Filterbeutel nach einem der vorhergehenden Ansprüche
    **dadurch gekennzeichnet, dass** die durchschnittliche Totalporosität mindestens 95 % beträgt.

5.  Filterbeutel nach einem der vorhergehenden Ansprüche
    **dadurch gekennzeichnet, dass** der durchschnittliche Median des Porendurchmessers mindestens 120 μm beträgt.

6.  Filterbeutel nach einem der vorhergehenden Ansprüche
    **dadurch gekennzeichnet, dass** der durchschnittliche Median des Porendurchmessers mindestens 150 μm beträgt.

7.  Filterbeutel nach einem der vorhergehenden Ansprüche
    **dadurch gekennzeichnet, dass** der durchschnittliche Median des Porendurchmessers mindestens 180 μm beträgt.

8.  Filterbeutel nach einem der vorhergehenden Ansprüche
    **dadurch gekennzeichnet, dass** der durchschnittliche Median des Porendurchmessers mindestens 200 μm beträgt.

9.  Filterbeutel nach einem der vorhergehenden Ansprüche,
    **dadurch gekennzeichnet, dass** maximal 5 Schweißverbindungen vorhanden sind.

10. Filterbeutel nach einem der vorhergehenden Ansprüche,
    **dadurch gekennzeichnet, dass** die Schweißverbindungen gleichmäßig über die durchströmbare Fläche des Filterbeutels verteilt sind.

11. Filterbeutel nach einem der vorhergehenden Ansprüche,
    **dadurch gekennzeichnet, dass** die Schweißverbindung ungleichmäßig über die durchströmbare Fläche des Filterbeutels verteilt sind.

12. Filterbeutel nach einem der vorhergehenden Ansprüche,
    **dadurch gekennzeichnet, dass** die Schweißverbindung sternförmig, punktförmig, balkenförmig und/oder linienförmig ausgebildet ist.

13. Filterbeutel nach einem der vorhergehenden Ansprüche,
    **dadurch gekennzeichnet, dass** der Pressflächenanteil des Schweißmusters maximal 2 %, besonders bevorzugt maximal 1 %, beträgt.

**14.** Filterbeutel nach einem der vorhergehenden Ansprüche,
**dadurch gekennzeichnet, dass** die Stapelfasern eine Länge zwischen 1 und 100 mm, bevorzugt zwischen 3 bis 70 mm, besitzen.

**15.** Filterbeutel nach einem der vorhergehenden Ansprüche,
**dadurch gekennzeichnet, dass** die Stapelfaser eine Splitfaser und/oder Crimpfaser und/oder eine weitere Stapelfaser ist.

**16.** Filterbeutel nach vorhergehendem Anspruch,
**dadurch gekennzeichnet, dass** die Crimpfaser unterschiedliche räumliche Strukturen aufweist, bevorzugt vom Zickzack-, Wellen- und/oder Spiraltyp.

**17.** Filterbeutel nach einem der Ansprüche 15 oder
16, **dadurch gekennzeichnet, dass** die Crimpfaser eine mechanisch gecrimpte, eine Autocrimpfaser und/oder eine Bikomponentenfaser ist.

**18.** Filterbeutel nach einem der vorhergehenden Ansprüche,
**dadurch gekennzeichnet**, das die Stapelfaser eine elektrostatisch geladene Stapelfaser ist.

**19.** Filterbeutel nach einem der vorhergehenden Ansprüche,
**dadurch gekennzeichnet, dass** die Stapelfaser ausgewählt ist aus Naturfasern und/oder Chemiefasern.

**20.** Filterbeutel nach einem der vorhergehenden Ansprüche,
**dadurch gekennzeichnet, dass** die flächenbezogene Masse der Faservlieslage zwischen 10 und 200 g/m$^2$, bevorzugt zwischen 20 bis 100 g/m$^2$, beträgt.

**21.** Filterbeutel nach einem der vorhergehenden Ansprüche,
**dadurch gekennzeichnet, dass** die Vliesstofflage eine flächenbezogene Masse von mindestens 5 g/m$^2$ aufweist.

**22.** Filterbeutel nach vorhergehendem Anspruch,
**dadurch gekennzeichnet, dass** die Vliesstofflage ein Scrim, bevorzugt ein Spinnvlies oder eine Meltblownlage ist.

**23.** Filterbeutel nach einem der vorhergehenden Ansprüche,
**dadurch gekennzeichnet, dass** der Verbund aus zwei Vliesstofflagen, zwischen denen die Faservlieslage angeordnet ist, besteht.

**24.** Filterbeutel nach einem der vorhergehenden Ansprüche,
**dadurch gekennzeichnet, dass** der Verbund aus einer Vliesstofflage und einer Feinfilter-Spinnvlieslage, zwischen denen die Faservlieslage angeordnet ist, besteht.

**25.** Filterbeutel nach einem der vorhergehenden Ansprüche,
**dadurch gekennzeichnet, dass** der Verbund mindestens eine weitere Feinfilter-Spinnvlieslage umfasst.

**26.** Filterbeutel nach einem der vorhergehenden Ansprüche,
**dadurch gekennzeichnet, dass** die Feinfilter-Spinnvlieslagen unterschiedliche Filtereigenschaften aufweisen.

**27.** Filterbeutel nach einem der vorhergehenden Ansprüche,
**dadurch gekennzeichnet, dass** abströmseitig eine Feinfilter-Spinnvlieslage angeordnet ist.

**28.** Filterbeutel nach einem der vorhergehenden Ansprüche,
**dadurch gekennzeichnet, dass** die weiteren Lagen aus Papier, Vliesmaterial und/oder Nanofasern gebildet sind.

**29.** Filterbeutel nach einem der vorhergehenden Ansprüche,
**dadurch gekennzeichnet, dass** alle Lagen durchgängig durch die ültraschalschweißverbindung verbunden sind.

**30.** Filterbeutel nach einem der vorhergehenden Ansprüche,
**dadurch gekennzeichnet, dass** durch die Anordnung der Schweißverbindungen eine kissenartige Ausbildung vorliegt.

**31.** Verwendung des Filterbeutels nach einem der vorhergehenden Ansprüche als Staubsaugerbeutel.


**Claims**

**1.** Filter bag for a vacuum cleaner made of a filter material comprising at least three layers, at least two layers which comprise at least one nonwoven fabric layer and at least one nonwoven fibre layer, containing staple fibres and/or filaments, being connected by a weld with the proviso that the compressed surface area proportion of the weld pattern is at most 5% of the surface of the permeable surface area of the filter bag and in that, relative to the total permeable surface area of the filter bag, on average at most 10 welds per 10 cm$^2$ are present.

**2.** Filter bag according to claim 1,
**characterised in that** the average total porosity is at least 65%.

**3.** Filter bag according to one of the preceding claims,
**characterised in that** the average total porosity is at least 80%.

**4.** Filter bag according to one of the preceding claims,
**characterised in that** the average total porosity is at least 95%.

**5.** Filter bag according to one of the preceding claims,
**characterised in that** the average median of the pore diameter is at least 120 $\mu$m.

**6.** Filter bag according to one of the preceding claims,
**characterised in that** the average median of the pore diameter is at least 150 $\mu$m.

**7.** Filter bag according to one of the preceding claims,
**characterised in that** the average median of the pore diameter is at least 180 $\mu$m.

**8.** Filter bag according to one of the preceding claims, **characterised in that** the average median of the pore diameter is at least 200 $\mu$m.

**9.** Filter bag according to one of the preceding claims, **characterised in that** at most 5 welds are present.

**10.** Filter bag according to one of the preceding claims, **characterised in that** the welds are distributed uniformly over the permeable surface of the filter bag.

**11.** Filter bag according to one of the preceding claims, **characterised in that** the welds are distributed non-uniformly over the permeable surface of the filter bag.

**12.** Filter bag according to one of the preceding claims, **characterised in that** the welds have a star-shaped, punctiform, bar-shaped and/or linear configuration.

**13.** Filter bag according to one of the preceding claims, **characterised in that** the compressed surface area proportion of the weld pattern is at most 2%, particularly preferred at most 1%.

**14.** Filter bag according to one of the preceding claims, **characterised in that** the staple fibres have a length between 1 and 100 mm, preferably between 3 to 70 mm.

**15.** Filter bag according to one of the preceding claims, **characterised in that** the staple fibre is a split fibre and/or crimped fibre and/or a further staple fibre.

**16.** Filter bag according to the preceding claim,
**characterised in that** the crimped fibre has different spatial structures, preferably of the zig-zag, undulating and/or spiral type.

**17.** Filter bag according to one of the claims 15 or 16,
**characterised in that** the crimped fibre is a mechanically crimped fibre, an autocrimped fibre and/or a bicomponent fibre.

**18.** Filter bag according to one of the preceding claims,
**characterised in that** the staple fibre is an electrostatically charged staple fibre.

**19.** Filter bag according to one of the preceding claims,
**characterised in that** the staple fibre is selected from natural fibres and/or chemical fibres.

**20.** Filter bag according to one of the preceding claims,
**characterised in that** the mass surface density of the nonwoven fibre layer is between 10 and 200 g/m$^2$, preferably between 20 to 100 g/m$^2$.

**21.** Filter bag according to one of the preceding claims,
**characterised in that** the nonwoven fabric layer has a mass surface density of at least 5 g/m$^2$.

**22.** Filter bag according to the preceding claim,
**characterised in that** the nonwoven fabric layer is a scrim, preferably a spun-bonded fabric or a melt-blown layer.

**23.** Filter bag according to one of the preceding claims,
**characterised in that** the composite comprises two nonwoven fabric layers between which the nonwoven fibre layer is disposed.

**24.** Filter bag according to one of the preceding claims,
**characterised in that** the composite comprises a nonwoven fabric layer and a fine filter spun-bonded layer between which the nonwoven fibre layer is disposed.

**25.** Filter bag according to one of the preceding claims,
**characterised in that** the composite comprises at least one further fine filter spun-bonded layer.

**26.** Filter bag according to one of the preceding claims,
**characterised in that** the fine filter spun-bonded layers have different filter properties.

**27.** Filter bag according to one of the preceding claims,
**characterised in that** a fine filter spun-bonded layer is disposed on the outflow side.

**28.** Filter bag according to one of the preceding claims,
**characterised in that** the further layers are formed from paper, nonwoven material and/or nanofibres.

**29.** Filter bag according to one of the preceding claims,
**characterised in that** all the layers are connected right through by the ultrasonic weld.

**30.** Filter bag according to one of the preceding claims,
**characterised in that** the **characterised in that** a cushion-like configuration is present due to the arrangement of the welds.

**31.** Use of the filter bag according to one of the preceding claims, as vacuum cleaner bag.

**Revendications**

**1.** Sac filtrant pour un aspirateur, en matériau filtrant, comprenant au moins trois couches, dans lequel au moins deux couches, qui sont constituées d'au moins une couche de non-tissé et d'au moins une couche de non-tissé fibreux, contenant des fibres coupées et/ou des filaments, sont reliées par une connexion par soudage, à condition que la fraction de surface pressée de l'échantillon de soudure fasse au maximum 5 % de la surface de la face perméable du sac filtrant et que, par rapport à toute la face perméable du sac filtrant, il y ait, en moyenne, au maximum 10 connexions par soudage par 10 cm$^2$.

**2.** Sac filtrant selon la revendication 1,

**caractérisé en ce que** la porosité totale moyenne est d'au moins 65 %.

3. Sac filtrant selon l'une quelconque des revendications précédentes,
**caractérisé en ce que** la porosité totale moyenne est d'au moins 80 %.

4. Sac filtrant selon l'une quelconque des revendications précédentes,
**caractérisé en ce que** la porosité totale moyenne est d'au moins 95 %.

5. Sac filtrant selon l'une quelconque des revendications précédentes,
**caractérisé en ce que** la médiane moyenne du diamètre des pores est d'au moins 120 $\mu$m.

6. Sac filtrant selon l'une quelconque des revendications précédentes,
**caractérisé en ce que** la médiane moyenne du diamètre des pores est d'au moins 150 $\mu$m.

7. Sac filtrant selon l'une quelconque des revendications précédentes,
**caractérisé en ce que** la médiane moyenne du diamètre des pores est d'au moins 180 $\mu$m.

8. Sac filtrant selon l'une quelconque des revendications précédentes,
**caractérisé en ce que** la médiane moyenne du diamètre des pores est d'au moins 200 $\mu$m.

9. Sac filtrant selon l'une quelconque des revendications précédentes,
**caractérisé en ce qu'**il y a au maximum 5 connexions par soudage.

10. Sac filtrant selon l'une quelconque des revendications précédentes,
**caractérisé en ce que** les connexions par soudage sont distribuées régulièrement sur la face perméable du sac filtrant.

11. Sac filtrant selon l'une quelconque des revendications précédentes,
**caractérisé en ce que** la connexion par soudage est distribuée irrégulièrement sur la face perméable du sac filtrant.

12. Sac filtrant selon l'une quelconque des revendications précédentes,
**caractérisé en ce que** la connexion par soudage est conformée en étoile, en point, en barre et/ou en ligne.

13. Sac filtrant selon l'une quelconque des revendications précédentes,
**caractérisé en ce que** la fraction de surface pressée de l'échantillon de soudure est au maximum de 2 %, de préférence au maximum de 1 %.

14. Sac filtrant selon l'une quelconque des revendications précédentes,
**caractérisé en ce que** les fibres coupées ont une longueur comprise entre 1 et 100 mm, de préférence entre 3 et 70 mm.

15. Sac filtrant selon l'une quelconque des revendications précédentes,
**caractérisé en ce que** la fibre coupée est une fibre fibrillée et/ou une fibre frisée et/ou une autre fibre coupée.

16. Sac filtrant selon la revendication précédente,
**caractérisé en ce que** la fibre frisée présente différentes structures spatiales, de préférence du type en zigzag, ondulé et/ou spiralé.

17. Sac filtrant selon l'une quelconque des revendications 15 ou 16,
**caractérisé en ce que** la fibre frisée est une fibre frisée mécaniquement, une fibre à auto-frisage et/ou une fibre à deux composants.

18. Sac filtrant selon l'une quelconque des revendications précédentes,
**caractérisé en ce que** la fibre coupée est une fibre coupée à charge électrostatique.

19. Sac filtrant selon l'une quelconque des revendications précédentes,
**caractérisé en ce que** la fibre coupée est choisie parmi des fibres naturelles et/ou des fibres chimiques.

**20.** Sac filtrant selon l'une quelconque des revendications précédentes,
**caractérisé en ce que** la masse rapportée à la surface de la couche de non-tissé fibreux est comprise entre 10 et 200 g/m$^2$, de préférence entre 20 et 100 g/m$^2$.

**21.** Sac filtrant selon l'une quelconque des revendications précédentes,
**caractérisé en ce que** la couche de non-tissé présente une masse rapportée à la surface d'au moins 5 g/m$^2$.

**22.** Sac filtrant selon la revendication précédente,
**caractérisé en ce que** la couche de non-tissé est une mousseline, de préférence un filé-lié ou une couche soufflée en fusion.

**23.** Sac filtrant selon l'une quelconque des revendications précédentes,
**caractérisé en ce que** le composite est constitué de deux couches de non-tissé, entre lesquelles est disposée la couche de non-tissé fibreux.

**24.** Sac filtrant selon l'une quelconque des revendications précédentes,
**caractérisé en ce que** le composite est constitué d'une couche de non-tissé et d'une couche de non tissé à filtrage fin, entre lesquelles est disposée la couche de non-tissé fibreux.

**25.** Sac filtrant selon l'une quelconque des revendications précédentes,
**caractérisé en ce que** le composite comprend au moins une autre couche de non tissé à filtrage fin.

**26.** Sac filtrant selon l'une quelconque des revendications précédentes,
**caractérisé en ce que** les couches de non tissé à filtrage fin présentent des propriétés filtrantes différentes.

**27.** Sac filtrant selon l'une quelconque des revendications précédentes,
**caractérisé en ce que**, côté évacuation, est aménagée une couche de non tissé à filtrage fin.

**28.** Sac filtrant selon l'une quelconque des revendications précédentes,
**caractérisé en ce que** les autres couches sont formées de papier, d'un matériau textile et/ou de nanofibres.

**29.** Sac filtrant selon l'une quelconque des revendications précédentes,
**caractérisé en ce que** toutes les couches sont reliées en continu par la connexion par soudage aux ultrasons.

**30.** Sac filtrant selon l'une quelconque des revendications précédentes,
**caractérisé en ce que**, en raison de l'aménagement des connexions par soudage, est obtenue une forme de réalisation du type en coussin.

**31.** Utilisation du sac filtrant selon l'une quelconque des revendications précédentes, comme sac d'aspirateur.

Fig. 1:

Fig. 2:

Fig. 3:

Fig. 4:

Fig. 5:

Fig. 6:

Fig. 7:

Fig. 8:

Fig. 9:

Fig. 10

Tabelle 1

| | Einzellagen | | | | Composite | | | | |
|---|---|---|---|---|---|---|---|---|---|
| | Spinnvlies | Faservlies | Meltblown | Spinnvlies | Flächen-bezogene Masse [g/m²] | Dicke [mm] | Bauschigkeit [cm³/g] | Raumdichte [g/cm³] | Zeichnung Nr. |
| | Flächenbezogene Masse [g/m²] | | | | | | | | |
| Beispiel 1 Faservlies 100% Spaltfaser 0,2 Schweißpunkte / cm² | 17 | 49 | 24 | 25 | 115 | 3,07 | 28,73 | 0,0374 | 3 |
| Beispiel 2 Faservlies 100% Spaltfaser 0,2 Schweißpunkte / cm² | 17 | 72 | 24 | 25 | 138 | 3,97 | 28,73 | 0,0348 | 3 |
| Beispiel 3 Faservlies 100% Spaltfaser 0,2 Schweißpunkte / cm² | 17 | 91 | 24 | 25 | 157 | 5,25 | 33,43 | 0,0299 | 3 |
| Beispiel 4 Faservlies 100% Spaltfaser 0,2 Schweißpunkte / cm² | 17 | 48 | | | 65 | 2,88 | 44,03 | 0,0227 | 1 |
| Beispiel 5 Faservlies 100% Spaltfaser 0,2 Schweißpunkte / cm² | 17 | 75 | | | 92 | 4,04 | 43,86 | 0,0228 | 1 |
| Beispiel 6 Faservlies 100% Spaltfaser 0,2 Schweißpunkte / cm² | 17 | 98 | | | 115 | 5,75 | 50,00 | 0,0200 | 1 |
| Beispiel 7 Faservlies 100% Spaltfaser 0,2 Schweißpunkte / cm² | 17 | 104 | | 17 | 138 | 6,04 | 43,80 | 0,0228 | 4 |
| Vergleichsbeispiel 1 Faservlies 100% Spaltfaser 2,5 Schweißpunkte / cm² | 17 | 49 | 24 | 25 | 115 | 2,59 | 22,51 | 0,0444 | |
| Vergleichsbeispiel 2 Faservlies 100% Spaltfaser 2,5 Schweißpunkte / cm² | 17 | 72 | 24 | 25 | 138 | 2,90 | 21,02 | 0,0476 | |
| Vergleichsbeispiel 3 Faservlies 100% Spaltfaser 2,5 Schweißpunkte / cm² | 17 | 91 | 24 | 25 | 157 | 3,64 | 23,18 | 0,0431 | |
| Vergleichsbeispiel 4 Faservlies 100% Spaltfaser 2,5 Schweißpunkte / cm² | 17 | 48 | | | 65 | 2,41 | 37,09 | 0,0270 | |
| Vergleichsbeispiel 5 Faservlies 100% Spaltfaser 2,5 Schweißpunkte / cm² | 17 | 75 | | | 92 | 3,10 | 33,73 | 0,0296 | |
| Vergleichsbeispiel 6 Faservlies 100% Spaltfaser 2,5 Schweißpunkte / cm² | 17 | 98 | | | 115 | 3,77 | 32,77 | 0,0305 | |
| Vergleichsbeispiel 7 Faservlies 100% Spaltfaser 2,5 Schweißpunkte / cm² | 17 | 104 | | 17 | 138 | 3,49 | 25,27 | 0,0396 | |

# Fig. 11

**Tabelle 2**

| Flächen-bezogene Masse [g/m²] | Beispiel 1<br>Faservlies 100% Spaltfaser<br>0,2 Schweißpunkte / cm² | Vergleichsbeispiel 1<br>Faservlies 100% Spaltfaser<br>2,5 Schweißpunkte / cm² | Δ Dicke [%] |
|---|---|---|---|
| | Dicke [mm] | | |
| 114,9 | 3,1 | 2,6 | 16 |

**Tabelle 3**

| Flächen-bezogene Masse [g/m²] | Beispiel 2<br>Faservlies 100% Spaltfaser<br>0,2 Schweißpunkte / cm² | Vergleichsbeispiel 2<br>Faservlies 100% Spaltfaser<br>2,5 Schweißpunkte / cm² | Δ Dicke [%] |
|---|---|---|---|
| | Dicke [mm] | | |
| 138,5 | 4,0 | 2,9 | 27 |

**Tabelle 4**

| Flächen-bezogene Masse [g/m²] | Beispiel 3<br>Faservlies 100% Spaltfaser<br>0,2 Schweißpunkte / cm³ | Vergleichsbeispiel 3<br>Faservlies 100% Spaltfaser<br>2,5 Schweißpunkte / cm² | Δ Dicke [%] |
|---|---|---|---|
| | Dicke [mm] | | |
| 156,9 | 5,3 | 3,6 | 31 |

**Tabelle 5**

| Flächen-bezogene Masse [g/m²] | Beispiel 4<br>Faservlies 100% Spaltfaser<br>0,2 Schweißpunkte / cm² | Vergleichsbeispiel 4<br>Faservlies 100% Spaltfaser<br>2,5 Schweißpunkte / cm² | Δ Dicke [%] |
|---|---|---|---|
| | Dicke [mm] | | |
| 65,4 | 2,9 | 2,4 | 16 |

# Fig. 12

Tabelle 6

| Flächen-bezogene Masse [g/m²] | Beispiel 5<br>Faservlies 100% Spaltfaser<br>0,2 Schweißpunkte / cm² | Vergleichsbeispiel 5<br>Faservlies 100% Spaltfaser<br>2,5 Schweißpunkte / cm² | Δ Dicke [%] |
|---|---|---|---|
| | Dicke [mm] | | |
| 91,9 | 4,0 | 3,1 | 23 |

Tabelle 7

| Flächen-bezogene Masse [g/m²] | Beispiel 6<br>Faservlies 100% Spaltfaser<br>0,2 Schweißpunkte / cm² | Vergleichsbeispiel 6<br>Faservlies 100% Spaltfaser<br>2,5 Schweißpunkte / cm² | Δ Dicke [%] |
|---|---|---|---|
| | Dicke [mm] | | |
| 115,1 | 5,8 | 3,8 | 34 |

Tabelle 8

| Flächen-bezogene Masse [g/m²] | Beispiel 7<br>Faservlies 100% Spaltfaser<br>0,2 Schweißpunkte / cm² | Vergleichsbeispiel 7<br>Faservlies 100% Spaltfaser<br>2,5 Schweißpunkte / cm² | Δ Dicke [%] |
|---|---|---|---|
| | Dicke [mm] | | |
| 137,5 | 6,0 | 3,5 | 42 |

Fig. 13a:

0 cm   1 cm   2 cm   3 cm   4 cm   5 cm   6 cm   7 cm   8 cm   9 cm   10 cm

Fig. 13b:

0 cm   1 cm   2 cm   3 cm   4 cm   5 cm   6 cm   7 cm   8 cm   9 cm   10 cm

# Fig. 14

Einfluß der Anzahl der Schweißpunkte auf die Staubspeicherfähigkeit

Volumenstrom [m³/h] vs. Staubbeladung DMT Typ 8 [g]

- - - 2,5 Punkte/cm²
—— 0,2 Punkte/cm²

Fig. 15:

Fig. 16:

Fig. 17:

Tabelle 9

| Schweiß punkte/100 cm² | Durchschnittliche Totalporosität [%] | Durchschnittlicher Median des Porendurchmessers [µm] |
|---|---|---|
| 16 | 96,8 | 201,8 |
| 70 | 83,5 | 160,8 |
| 95 | 67,4 | 129,1 |

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3812849
- US 4589894 A
- US 5647881 A
- EP 1258277 B1
- EP 0960645 B1
- EP 1362627 A1
- EP 1254693 A2
- EP 1197252 A1
- EP 0854943 A
- GB 0002998 W

### In der Beschreibung aufgeführte Nicht-Patentliteratur

- **Akshaya Jena ; Krishna Gupta.** Characterization of Pore Structure of Filtration Media. *Fluid Particle Separation Journal,* 2002, vol. 4 (3), 227-241
- A Novel Technique for Pore Structure Characterization without the Use of Any Toxic Material. **A. Jena ; K. Gupta.** Nondestructive Characterization of Materials XI. Springer-Verlag, 2002, 813-821
- Substitution of Alcohol in Porometers for Bubble Point Determination. **Vibhor Gupta ; A.K. Jena.** Advances in Filtration and Separation Technology. American Filtration and Separation Society, 1999, vol. 13b, 833-844